# EUROPÄISCHE PATENTANMELDUNG

(11) **EP 1 820 568 A1**
(43) Veröffentlichungstag der Anmeldung: **22.08.2007**
(21) Anmeldenummer: 06110230.7
(22) Anmeldetag: 21.02.2006
(51) Int. Cl.: B01F 13/10, B01F 15/00, B01F 15/04, B44D 3/00, B44D 3/12, B29C 45/18, G05B 19/12

(54) **Behälter für Flüssigfarbe aufweisend ein maschinenlesbares Speicherelement, und Verfahren zum Dosieren von Flüssigfarbe**

(71) Anmelder: Degussa GmbH, 40474 Düsseldorf (DE)
(72) Erfinder: Weelen Maurice, 6287 AV Eys (NL); Welp Martin, Dr., 48493 Wettlingen (NL)

(57) **Zusammenfassung**

Ein Behälter für Flüssigfarbe mit einem maschinenlesbaren Speicherelement, in dem Daten zu Stoffeigenschaften der im Behälter enthaltenen Flüssigfarbe gespeichert sind und ein Verfahren zum Dosieren von Flüssigfarbe, bei dem die Dosiereinrichtung aus dem Speicherelement des Behälters Daten zu Stoffeigenschaften der im Behälter enthaltenen Flüssigfarbe ausliest und mit den ausgelesenen Daten die Menge an dosierter Flüssigfarbe einstellt oder steuert, ermöglicht auch mit einer nicht genau standardisierten Flüssigfarbe eine gleichbleibende und reproduzierbare Einfärbung von Zubereitungen.

## Beschreibung

Die Erfindung betrifft einen Behälter für Flüssigfarbe und ein Verfahren zum Dosieren von Flüssigfarbe, mit denen auch mit einer nicht genau standardisierten Flüssigfarbe eine gleichbleibende und reproduzierbare Einfärbung erzielt werden kann.

Die Zudosierung von Flüssigfarbe ermöglicht in einfacher Weise eine Einfärbung von flüssigen, pastösen, pulverförmigen oder granulatförmigen Zubereitungen unmittelbar vor deren Verwendung. Durch eine solche Verwendung von Flüssigfarbe lässt sich bei zahlreichen Anwendungen eine Lagerhaltung der benötigten eingefärbten Zubereitung vermeiden.

Um bei der Einfärbung mit Flüssigfarbe ein gleichbleibendes und reproduzierbares Ergebnis zu erzielen, werden im Stand der Technik Flüssigfarben mit standardisierten Eigenschaften verwendet und die Flüssigfarben für die Herstellung einer bestimmten Einfärbung mit jeweils konstantem Gewicht bzw. Volumen dosiert. Die Standardisierung der Eigenschaften einer Flüssigfarbe erfordert allerdings zusätzliche Bearbeitungsschritte und ist vor allem schwierig bei Flüssigfarben, die sowohl nach Gewicht als auch nach Volumen dosiert werden und für die deshalb sowohl die Farbstärke als auch die Dichte der Flüssigfarbe standardisiert werden müssen.

Deshalb besteht ein Bedarf nach einem Verfahren zum Dosieren von Flüssigfarbe, das auch mit einer nicht genau standardisierten Flüssigfarbe in zuverlässiger Weise ein gleichbleibendes und reproduzierbares Ergebnis bei der Einfärbung erzielt.

Es wurde nun gefunden, dass sich diese Aufgabe lösen lässt durch einen Behälter für Flüssigfarbe, der ein maschinenlesbares Speicherelement aufweist, in dem Daten zu Stoffeigenschaften der im Behälter enthaltenen Flüssigfarbe gespeichert sind, sowie ein Verfahren zum Dosieren von Flüssigfarbe, bei dem die verwendete Dosiereinrichtung aus dem Speicherelement eines solchen Behälters Daten zu Stoffeigenschaften der Flüssigfarbe ausliest und mit den ausgelesenen Daten die Menge an dosierter Flüssigfarbe einstellt oder steuert.

Gegenstand der Erfindung ist ein Behälter für Flüssigfarbe, umfassend mindestens ein maschinenlesbares Speicherelement, in dem Daten zu Stoffeigenschaften der im Behälter enthaltenen Flüssigfarbe gespeichert sind.

Gegenstand der Erfindung ist weiterhin ein Verfahren zum Dosieren von Flüssigfarbe mit einer Dosiereinrichtung für Flüssigfarbe, die mit mindestens einem Behälter für Flüssigfarbe verbunden ist, das dadurch gekennzeichnet ist, dass mindestens ein Behälter verwendet wird, der mindestens ein maschinenlesbares Speicherelement umfasset, in dem Daten zu Stoffeigenschaften der im Behälter enthaltenen Flüssigfarbe gespeichert sind und die Dosiereinrichtung aus dem maschinenlesbaren Speicherelement des Behälters mindestens einen Teil der Daten zu Stoffeigenschaften der im Behälter enthaltenen Flüssigfarbe ausliest und mit den ausgelesenen Daten die Menge an dosierter Flüssigfarbe einstellt oder steuert.

Die erfindungsgemäßen Behälter für Flüssigfarbe umfassen mindestens ein maschinenlesbares Speicherelement.

Maschinenlesbar im Sinne der Erfindung sind Speicherelemente, aus denen ein Datenverarbeitungssystem Daten unmittelbar auslesen kann. Barcodeaufdrucke sind ein Beispiel für maschinenlesbare Speicherelemente, aus denen ein Datenverarbeitungssystem Daten unmittelbar optisch auslesen kann, während Textaufdrucke keine maschinenlesbaren Speicherelemente im Sinne der Erfindung sind, da die in dem Text enthaltenen Daten nicht unmittelbar maschinell ausgelesen werden können.

Vorzugsweise werden als maschinenlesbare Speicherelemente Barcodes, Magnetstreifen, elektrisch kontaktierte Speicherelemente oder durch Radiofrequenz lesbare Speicherelemente verwendet. Als maschinenlesbare Speicherelemente können nur lesbare Speicherelemente, wie zum Beispiel Barcodes oder ROM-Speicherbausteine verwendet werden. Ebenso geeignet sind beschreibbare Speicherelemente, wie zum Beispiel Magnetstreifen oder EEPROM-Speicherbausteine. In einer bevorzugten Ausführungsform werden durch Radiofrequenz lesbare Speicherelemente verwendet, die dem Fachmann als RFID-Tags bekannt sind.

In einer Ausführungsform der Erfindung wird der Behälter für Flüssigfarbe so ausgeführt, dass das maschinenlesbare Speicherelement bei der Verbindung des Behälters mit einer Dosiereinrichtung für die Flüssigfarbe in einer vorbestimmten Orientierung zu der Dosiereinrichtung so ausgerichtet wird, dass die Dosiereinrichtung aus dem Speicherelement Daten auslesen kann.

In dem maschinenlesbaren Speicherelement sind Daten zu Stoffeigenschaften der im Behälter enthaltenen Flüssigfarbe gespeichert. Vorzugsweise sind in dem Speicherelement Daten zu einer oder mehreren der Eigenschaften Farbton, Farbstärke, Helligkeit, Farbsättigung, Deckvermögen, Transparenz und Dichte der Flüssigfarbe gespeichert. Die Daten zu Farbton, Helligkeit und Farbsättigung werden vorzugsweise in Form der Parameter L, a und b oder der Parameter L, C_{ab} und h_{ab} des CIELAB-Systems oder der dazu korrespondierenden Parameter X, Y und Z gespeichert.

Zusätzlich können in dem maschinenlesbaren Speicherelement weitere Daten zu der im Behälter enthaltenen Flüssigfarbe gespeichert sein, wie zum Beispiel das Gewicht der im Behälter enthaltenen Flüssigfarbe oder ein oder mehrere Produktidentifikationsnummern.

Bei dem erfindungsgemäßen Verfahren zum Dosieren von Flüssigfarbe wird mindestens ein erfindungsgemäßer Behälter für Flüssigfarbe mit einer Dosiereinrichtung für Flüssigfarbe verbunden. Von der Dosiereinrichtung werden aus dem maschinenlesbaren Speicherelement die Daten zu Eigenschaften der im Behälter enthaltenen Flüssigfarbe ganz oder teilweise ausgelesen und mit diesen Daten die Menge an dosierter Flüssigfarbe eingestellt oder gesteuert.

Das Auslesen der Daten kann dabei durch den Benutzer der Dosiereinrichtung bewirkt werden, beispielsweise indem der Benutzer mit einem Barcode-Lesegerät die Daten aus einem an dem Behälter angebracht Barcode ausliest und von dem Barcode-Lesegerät auf die Dosiereinrichtung überträgt.

In einer anderen Ausführungsform erfolgt das Auslesen der Daten automatisch beim Verbinden des Behälters mit der Dosiereinrichtung, beispielsweise über eine Kupplung zwischen dem Behälter und der Dosiereinrichtung, über die das Speicherelement elektrisch kontaktiert wird, oder über ein in die Dosiereinrichtung integriertes Lesegerät für RFID-Tags. Vorzugsweise liest die Dosiereinrichtung bei einem Wechsel eines Behälters für Flüssigfarbe automatisch Daten aus dem maschinenlesbaren Speicherelement des neu mit der Dosiereinrichtung verbundenen Behälters aus.

Bei dem erfindungsgemäßen Verfahren kann die Dosierung der Flüssigfarbe kontinuierlich oder chargenweise erfolgen.

Vorzugsweise werden für das erfindungsgemäße Verfahren Dosiereinrichtungen verwendet, die bei denen die Dosierung der Flüssigfarbe kontinuierlich oder intermittierend mit konstanten Flussraten erfolgt. Durch eine solche Dosierung können flüssige, pastöse, pulverförmige oder granulatförmige Zubereitungen während deren Verarbeitung eingefärbt werden. Ein Beispiel für eine solche Einfärbung einer Zubereitung während der Verarbeitung ist die Einfärbung von Kunstoffen durch Dosieren von Flüssigfarbe in kontinuierlich betriebene Extruder oder intermittierend arbeitende Spritzgießmaschinen.

In einer bevorzugten Ausführungsform des erfindungsgemäßen Verfahrens liest die Dosiereinrichtung aus dem Speicherelement des Behälters Daten zur Dichte der im Behälter enthaltenen Flüssigfarbe aus und stellt mit den ausgelesenen Daten eine volumetrische Dosierung der Flüssigfarbe ein oder steuert diese. Diese Ausführungsform ermöglicht eine gleichbleibende und reproduzierbare Einfärbung mit Flüssigfarben, die auf eine gewichtsbezogen konstante Farbstärke standardisiert sind und keine genau standardisierte Dichte aufweisen. Besonders bevorzugt werden bei dieser Ausführungsform handelsübliche Behälter für Flüssigfarben verwendet, die zusätzlich mit einem Barcode gekennzeichnet sind, in dem die Dichte der im Behälter enthaltenen Flüssigfarbe gespeichert ist. Diese Ausführungsform ermöglicht die Verwendung von handelsüblichen, auf eine gewichtsbezogen konstante Farbstärke standardisierten Flüssigfarben, mit Dosiereinrichtungen mit volumetrischer Dosierung der Flüssigfarbe.

In einer weiteren bevorzugten Ausführungsform des erfindungsgemäßen Verfahrens liest die Dosiereinrichtung aus dem maschinenlesbaren Speicherelement Daten zum Gewicht der im Behälter enthaltenen Flüssigfarbe aus und überwacht mit den ausgelesenen Daten die Restmenge an Flüssigfarbe im Behälter. Mit dieser Ausführungsform lässt sich auch bei der Verwendung von Behältern mit unterschiedlichem Füllgewicht zuverlässig vermeiden, dass die Farbdosierung bei entleertem Behälter unbeabsichtigt ausbleibt. Bei Verwendung von beschreibbaren Speicherelementen ist es außerdem möglich, die im Behälter verbliebene Restmenge an Flüssigfarbe in dem Speicherelement zu speichern. Damit wird es möglich, nur noch teilweise befüllte Behälter auszuwechseln und auch beim Verbinden der Dosiereinrichtung mit einem nur noch teilweise befüllten Behälter die im Behälter verbliebene Restmenge zu überwachen und ein Leerlaufen des Behälters während der Dosierung zu verhindern.

In einer weiteren bevorzugten Ausführungsform des erfindungsgemäßen Verfahrens ist die Dosiereinrichtung mit mindestens zwei Behältern für Flüssigfarbe verbunden und mischt mindestens zwei Flüssigfarben miteinander. Jeder der mit der Dosiereinrichtung verbundenen Behälter weist ein maschinenlesbares Speicherelement auf, in dem Daten zum Farbton der in dem Behältern enthaltenen Flüssigfarbe gespeichert sind und die Dosiereinrichtung stellt mit den ausgelesenen Daten das Mischungsverhältnis der Flüssigfarben ein oder steuert dieses.

Vorzugsweise sind im Speicherelement zusätzlich zum Farbton noch Daten zu Helligkeit und Farbsättigung in Form der Parameter L, a und b oder der Parameter L, C_{ab} und h_{ab} des CIELAB-Systems oder der dazu korrespondierenden Parameter X, Y und Z gespeichert. Mit den ausgelesenen Daten und mit in der Dosiereinrichtung hinterlegten Sollwerten für die Parameter L, a und b bzw. L, C_{ab} und h_{ab} oder der dazu korrespondierenden Parameter X, Y und Z der Flüssigfarbe kann in der Dosiereinrichtung eine Korrektur für das Mischungsverhältnis berechnet werden, mit der auch bei Abweichungen der Parameter L, a und b bzw. L, C_{ab} und h_{ab} oder der dazu korrespondierenden Parameter X, Y und Z der Flüssigfarbe vom Sollwert eine gemischte Flüssigfarbe erhalten wird, mit der eine gleichbleibende und reproduzierbare Einfärbung erzielt wird. Für die Korrektur kann gegebenenfalls auch die Dosierung von weiteren Flüssigfarben erforderlich werden, die für die Rezeptur mit den Sollwerten nicht erforderlich sind. Geeignete Verfahren zur Berechnung der Korrektur sind dem Fachmann beispielsweise aus G. A. Klein, Farbenphysik für industrielle Anwendungen, Verlag Springer bekannt. Mit dieser Ausführungsform ist es möglich, auch aus nicht genau standardisierten Flüssigfarben eine gemischte Flüssigfarbe zu erhalten, mit der eine gleichbleibende und reproduzierbare Einfärbung erzielt wird. Selbst bei standardisierten Flüssigfarben kann mit dieser Ausführungsform des erfindungsgemäßen Verfahrens noch eine bessere Reproduzierbarkeit der Einfärbung erzielt werden, da sich die auch bei einer Standardisierung verbleibenden Abweichungen vom Sollwert bei der Dosierung noch ausgleichen lassen.

Mit dem erfindungsgemäßen Verfahren kann auch mit nicht genau standardisierten Flüssigfarben eine gleichbleibende und reproduzierbare Einfärbung von flüssigen, pastösen, pulverförmigen oder granulatförmigen Zubereitungen erreicht werden.

## Patentansprüche

1. Behälter für Flüssigfarbe, umfassend mindestens ein maschinenlesbares Speicherelement, in dem Daten zu Stoffeigenschaften der im Behälter enthaltenen Flüssigfarbe gespeichert sind.

2. Behälter nach Anspruch 1,
**dadurch gekennzeichnet,**
**dass** die im maschinenlesbaren Speicherelement gespeicherten Daten ausgewählt sind aus Daten zu Farbton, Farbstärke, Helligkeit, Farbsättigung, Deckvermögen, Transparenz und Dichte der Flüssigfarbe, sowie Kombinationen davon.

3. Behälter nach Anspruch 1 oder 2,
**dadurch gekennzeichnet,**
**dass** im maschinenlesbaren Speicherelement für die Flüssigfarbe Parameter L, a und b oder Parameter L, C_{ab} und h_{ab} des CIELAB-Systems oder der dazu korrespondierende Parameter X, Y und Z gespeichert sind.

4. Behälter nach einem der vorangehenden Ansprüche,
**dadurch gekennzeichnet,**
**dass** das maschinenlesbare Speicherelement ausgewählt ist aus der Gruppe von Barcodes, Magnetstreifen, elektrisch kontaktierten Speicherelementen und durch Radiofrequenz lesbaren Speicherelementen.

5. Behälter nach einem der vorangehenden Ansprüche,
**dadurch gekennzeichnet,**
**dass** in dem maschinenlesbaren Speicherelement zusätzlich Daten zum Gewicht der im Behälter enthaltenen Flüssigfarbe gespeichert sind.

6. Verfahren zum Dosieren von Flüssigfarbe mit einer Dosiereinrichtung für Flüssigfarbe, die mit mindestens einem Behälter für Flüssigfarbe verbunden ist,
**dadurch gekennzeichnet,**
**dass** mindestens ein Behälter verwendet wird, der mindestens ein maschinenlesbares Speicherelement umfasst, in dem Daten zu Stoffeigenschaften der im Behälter enthaltenen Flüssigfarbe gespeichert sind und die Dosiereinrichtung aus dem maschinenlesbaren Speicherelement des Behälters mindestens einen Teil der Daten zu Stoffeigenschaften der im Behälter enthaltenen Flüssigfarbe ausliest und mit den ausgelesenen Daten die Menge an dosierter Flüssigfarbe einstellt oder steuert.

7. Verfahren nach Anspruch 6,
**dadurch gekennzeichnet,**
**dass** die im maschinenlesbaren Speicherelement gespeicherten Daten ausgewählt sind aus Daten zu Farbton, Farbstärke, Helligkeit, Farbsättigung, Deckvermögen, Transparenz und Dichte der Flüssigfarbe, sowie Kombinationen davon.

8. Verfahren nach Anspruch 6 oder 7,
**dadurch gekennzeichnet,**
**dass** in dem maschinenlesbaren Speicherelement Daten zur Dichte der im Behälter enthaltenen Flüssigfarbe gespeichert sind und die Dosiereinrichtung mit den ausgelesenen Daten eine volumetrische Dosierung der Flüssigfarbe einstellt oder steuert.

9. Verfahren nach einem der Ansprüche 6 bis 8,
**dadurch gekennzeichnet,**
**dass** in dem maschinenlesbaren Speicherelement zusätzlich Daten zum Gewicht der im Behälter enthaltenen Flüssigfarbe gespeichert sind und die Dosiereinrichtung mit den ausgelesenen Daten die Restmenge an Flüssigfarbe im Behälter überwacht.

10. Verfahren nach einem der Ansprüche 6 bis 9,
**dadurch gekennzeichnet,**
**dass** die Dosiereinrichtung mit mindestens zwei Behältern für Flüssigfarbe verbunden ist und mindestens zwei Flüssigfarben miteinander mischt, jeder der Behälter ein maschinenlesbares Speicherelement aufweist, in dem Daten zum Farbton der in dem Behältern enthaltenen Flüssigfarbe gespeichert sind und die Dosiereinrichtung mit den ausgelesenen Daten das Mischungsverhältnis der Flüssigfarben einstellt oder steuert.

11. Verfahren nach einem der Ansprüche 6 bis 10,
**dadurch gekennzeichnet,**
**dass** das maschinenlesbare Speicherelement ausgewählt ist aus der Gruppe von Barcodes, Magnetstreifen, elektrisch kontaktierten Speicherelementen und durch Radiofrequenz lesbaren Speicherelementen.

12. Verfahren nach einem der Ansprüche 6 bis 11,
**dadurch gekennzeichnet,**
**dass** die Dosiereinrichtung bei einem Wechsel eines Behälters für Flüssigfarbe automatisch Daten aus dem maschinenlesbaren Speicherelement des neu mit der Dosiereinrichtung verbundenen Behälters ausliest.
